# EUROPÄISCHE PATENTSCHRIFT

(11) **EP 2 452 220 B1**
(45) Veröffentlichungstag und Bekanntmachung des Hinweises auf die Patenterteilung: **16.11.2016**
(21) Anmeldenummer: 10724849.4
(22) Anmeldetag: 11.06.2010
(51) Int. Cl.: G02B 6/38, H01R 13/625, H01R 13/629, H01R 13/71

(54) **STECKERVORRICHTUNG FÜR OPTISCHES KABEL**
OPTICAL CABLE CONNECTOR DEVICE
DISPOSITIF DE CONNEXION POUR CÂBLE OPTIQUE

(30) Priorität: 06.07.2009 CH 10422009; 18.08.2009 CH 12792009
(43) Veröffentlichungstag der Anmeldung: 16.05.2012
(73) Patentinhaber: Huber+Suhner AG, 9100 Herisau (CH)
(72) Erfinder: GREUB, Daniel, CH-9000 St. Gallen (CH); VÖLKER, Michael Lothar, CH-9468 Sax (CH); BOLLHALDER, Leo, CH-9245 Oberbüren (CH)
(74) Vertreter: Rentsch Partner AG
(86) Internationale Anmeldenummer: PCT/EP2010/058211
(87) Internationale Veröffentlichungsnummer: WO 2011/003693

(56) Entgegenhaltungen:
- EP-A- 0 665 454
- EP-A- 1 043 612
- EP-A- 1 067 416
- EP-A- 1 170 830
- US-A1- 2006 089 049
- US-A1- 2007 047 877
- US-A1- 2009 060 420
- US-B1- 6 884 099
- US-B1- 7 338 214

## Beschreibung

Die Erfindung betrifft eine Kabeleinführung, z.B. zum Anschliessen von einem Lichtwellenleiterkabel an ein Remote Radio Head (RRH) bei einer Mobilfunkantenne.

Bei den mobilen Kommunikationssystemen werden sogenannte Remote Radio Heads (RRH) verwendet. Diese erlauben einen grösseren Abstand zwischen der Basisstation und der Antenne. Die RRHs werden üblicherweise über Fiberoptikleitungen (Lichtwellenleiterkabel) mit der Basisstation verbunden. Damit die Fiberoptikleitungen mit den daran befestigten Verbindern einfach angeschlossen werden können, kommen Kabeleinführungen mit vorgelagerten Halteeinrichtungen zum Einsatz.

Aus dem Stand der Technik sind Kabeleinführungen bekannt. Diese bestehen aus einem geräteseitigen Flansch mit einem Kopplungsgewinde, einer Montageöffnung und einem kabelseitigen Steckerteil mit einer Überwurfmutter, welche mit dem Kopplungsgewinde wirkverbunden werden kann. Der Flansch wird aussen an einem Gehäuse eines RRH befestigt. Durch die Montageöffnung können am Kabel befestigte LC-Verbinder im Innern des RRH z.B. mit einem SFP-Modul wirkverbunden werden. Beim SFP-Modul (auch mini-GBIC genannt) handelt es sich um ein standardisiertes Modul für Netzwerkverbindungen. Der Durchmesser der Montageöffnung ist in der Regel so gross, dass das SFP-Modul zur Montage durch die Montageöffnung geschoben werden kann.

Bei den aus dem Stand der Technik bekannten, üblicherweise verwendeten LC-Verbindern handelt es sich um standardisierte optische Verbinder mit einem Grundkörper mit einem schräg nach hinten oben abstehenden federnd ausgebildeten Verriegelungsarm mit zwei seitlich nach aussen abstehenden Verriegelungsschultern. Beim Einstecken in eine dafür vorgesehene Buchse wird der Verriegelungsarm nach unten bewegt, so dass die Verriegelungsschultern in dafür vorgesehene Ausnehmungen am Gegenstück einschnappen. Zum Entriegeln muss der Verriegelungsarm gegen den Grundkörper gedrückt werden, bis die Verriegelungsschultern entriegelt sind. Danach kann der LC-Verbinder aus dem Gegenstück herausgezogen werden. Häufig werden gleichzeitig zwei seitlich nebeneinander angeordnete und miteinander über eine Halterung verbundene LC-Verbinder eingesteckt, respektive entriegelt. Damit eine gemeinsame Entriegelung möglich ist, weist die Halterung bei den herkömmlichen Verbindern einen Bügel auf, mittels dem beide Verriegelungsarme gleichzeitig entriegelt werden können. Der Bügel ist hinter den Verriegelungsarmen angeordnet und steht nach vorne oben ab. Indem der Bügel nach vorne unten auf die Verriegelungsarme gedrückt wird, werden diese freigegeben. Insbesondere bei schwierigen Platzverhältnissen ist die Entriegelung schwierig, da die für das Niederdrücken des Bügels erforderliche Kraft der Entnahmerichtung entgegen steht.

Die aus dem Stand der Technik bekannten Kabeleinführungen sind im Feld relativ schwierig zu montieren, da zuerst die LC-Verbinder mit dem SFP-Modul verbunden werden müssen. Zu diesem Zweck muss dieses durch die Montageöffnung hindurch erreicht werden. Dabei muss darauf geachtet werden, dass das Lichtwellenleiterkabel oder die daran befestigten LC-Verbinder, die in diesem Moment beide keine Zugentlastung aufweisen, nicht beschädigt werden. Erst danach kann die Überwurfmutter auf das Gewinde des Flansches geschraubt werden. Dabei ist zusätzlich darauf zu achten, dass durch das Aufschrauben der Hülse das Kabel nicht abgedreht wird.

US7338214 der Tyco Electronics Corporation wurde im März 2008 erteilt und befasst sich mit einem Verfahren und einer Vorrichtung zum Dichten eines Steckerteils einer Kabeleinführung für optische Verbinder. Über einen Adapter können zwei LC-Verbinder in einem Aussengehäuse des Steckerteils fix angeordnet werden. Diese Vorrichtung weist die vorgängig beschriebenen Nachteile auf.

US 2006/089049-A1 Duplexstecker mit Bayoneb-Mechanismus für einen Glasfaserverbinder.

EP1 018 660 A2 der Delphi Technologies Inc. wurde im Juli 2000 publiziert und zeigt eine Verbindungseinrichtung für die Kopplung eines Lichtwellenleiters mit einem optoelektrischen Wandler. Die Vorrichtung weist einen Sockel auf, der auf einer Platine befestigt werden kann. Ein kabelseitiges Verbinderteil kann in eine Öffnung eingeschnappt werden, in der er mittels einer Feder gehalten wird.

EP 0 154 781 A2 von der AMP Incorporated wurde 1985 publiziert und zeigt eine optische Verbinderanordnung mit einem gehäuseseitigen Flanschteil an dem von beiden Seiten ein optischer Verbinder angeschlossen werden kann. Die beiden Verbinder sind im montierten Zustand koaxial zueinander ausgerichtet und treten dabei miteinander in Wirkverbindung.

Von derselben Anmelderin ist eine Kabeleinführung bekannt, die gegenüber dem Stand der Technik einfacher montiert werde kann und weitere Verbesserungen aufweist. Die Kabeleinführung weist einen gehäuseseitigen Flansch mit einer Montageöffnung zur Durchführung eines Kabels auf. Ein von der Basisplatte des Flansches vorstehender Kragarm weist an dessen gegenüberliegendem Ende eine Haltevorrichtung auf, welche zur Aufnahme eines am Kabel angebrachten Gegenstückes geeignet ist, bevor über beide eine Befestigungshülse geschraubt wird. Damit besteht die Möglichkeit, das Kabel auf Zugentlastung zu schützen bevor die Verbinder angeschlossen sind.

Eine Aufgabe der Erfindung besteht darin, eine Kabeleinführung, respektive einen Verbinder zu zeigen, welcher die dem Stand der Technik anhaftenden Probleme vermeidet und sehr einfach montiert werden kann.

Bei schwierigen Bedingungen, z.B. bei der Montage an einem Antennenmast oder bei beschränkten Platzverhältnissen, ist es von Vorteil, wenn die Kabeleinführung und der Verbinder mit einer einfachen Handbewegung gemeinsam gesteckt und gelöst werden können. Die Kabeleinführung sollte zudem eine kompakte Baugrösse haben und kostengünstig herstellbar sein. Je nach Anwendungsgebiet soll das SFP-Modul zudem einfach ein- und ausbaubar sein. Ebenfalls ist es von Vorteil, wenn nach dem Koppeln keine Zwangskräfte auf dem SFP-Modul wirken.

Von derselben Anmelderin ist ein verbesserter LC-Verbinder bekannt, der eine Entriegelung durch eine nach hinten, in Richtung des Kabels gerichtete Kraft ermöglicht. Der Verbinder weist einen Grundkörper mit einem vom Grundkörper nach schräg hinten oben abstehenden Verriegelungsarm auf. Ein Entriegelungselement ist mit dem Verriegelungsarm von einem oder mehreren Verbindern wirkverbunden und gegenüber dem Grundkörper derart in eine Entriegelungsrichtung verschiebbar, dass der Verriegelungsarm damit entriegelt wird. Das Entriegelungselement ist auf dem Grundkörper verschiebbar angeordnet und weist Wirkverbindungsmittel auf, mittels denen es mit einer weiteren Halterung wirkverbunden werden kann.

Die erfindungsgemässe Kabeleinführung ermöglicht es den vorgängig beschriebenen verbesserten optischen LC-Verbinder oder einen geeignet ausgebildeten anderen Verbinder, z.B. RJ-45 oder der gleichen, in einem Arbeitsgang mit einem Gegenstück zu verbinden und im Wesentlichen gleichzeitig eine Zugentlastung an einem Gehäuse zu befestigen. Im Unterschied zu den aus dem Stand der Technik bekannten Kabeleinführungen, die mehrere Arbeitsschritte erfordern, stellt dies eine erhebliche Erleichterung dar.

Die erfindungsgemässe Kabeleinführung weist in der Regel einen Flansch auf, der zur Montage an einem Gehäuse eines Gerätes, z.B. einem RRH, vorgesehen ist. Bei Bedarf kann der Flansch auch in einem Verbinderteil integriert sein, so dass z.B. zwei Kabel miteinander wirkverbunden werden können. Der Flansch weist Kopplungsmittel für eine Zugentlastung und eine Montageöffnung für ein oder mehrere zu verbindende Kabel auf. Bei den Kopplungsmitteln kann es sich je nach Ausgestaltung z.B. um ein Gewinde oder einen Bajonettverschluss oder eine Schnappvorrichtung handeln.

Ein kabelseitiger Steckerteil weist im Innern eine Halterung zur Aufnahme von mindestens einem Verbinder z.B. der vorgängig beschriebenen Art auf. Bei Bedarf können die Verbinder fest oder austauschbar in die Halterung integriert sein. Die Halterung weist zu diesem Zweck ebenfalls Wirkverbindungsmittel auf, welche mit den Wirkverbindungsmitteln der Verbinder wirkverbunden werden können.

Die Halterung wird über eine Steuerkulisse und mindestens einen in diese eingreifenden Steuerzapfen in Verbinderlängsrichtung kontrolliert bewegt, respektive gegenüber der Verriegelungshülse entlastet, indem eine Verriegelungshülse um die Längsrichtung des Steckerteils gedreht wird. Durch die Drehung werden die Kopplungsmittel des Steckerteils gleichzeitig mit den Kopplungsmitteln des Flansches mechanisch verbunden. Die im Inneren angeordnete Halterung kann federnd gelagert sein, damit beim Anschliessen Fehlstellungen und Ungenauigkeiten in Quer- und/oder Längsrichtung ausgeglichen werden können.

In einer Ausführungsform ist eine Steuerkulisse auf einer zylindrischen Mantelfläche eines mit der Verriegelungshülse mitdrehenden Steuerteils angeordnet. Die gegenüber der Verriegelungshülse in axialer Richtung verschiebbare Halterung weist einen Zapfen auf, der in die Steuerkulisse eingreift, so dass beim Drehen des Steuerteils die Halterung sich gegenüber dem Steuerteil in axialer Richtung bewegt. Damit bei einer Fehlstellung keine Beschädigung, des Steckerteils oder eines darin eingesetzten Verbinders auftritt, ist das Steuerteil in axialer Richtung federnd gelagert. Zu diesem Zweck ist zwischen dem Steuerteil und der Verriegelungshülse eine Feder angeordnet, die bei Bedarf auch zur Übertragung der Drehbewegung von der Verriegelungshülse auf das Steuerteil dienen kann. Alternativ oder in Ergänzung können andere Kopplungsmittel zwischen der Verriegelungshülse und dem Steuerteil vorgesehen werden, welche primär ein ungewolltes Verdrehen des Steuerteils gegenüber der Verriegelungshülse verhindern.

Die Ausführungsform der Erfindung weist im Innern eine auf einer Steuerkulisse aufbauende Mechanik auf, die beim Verriegeln des Steckerteils gegenüber der Buchse im Wesentlichen folgende Schritte ausführt: Der Steckerteil wird auf den Flansch aufgesetzt, wobei die im Innern des Verbinders angeordneten in einer Ausgangsposition vor ihrem Gegenstück angeordnet sind. Danach wird die Verriegelungshülse um ihre Längsrichtung gedreht (z.B. im Uhrzeigersinn), so dass mechanische Kopplungsmittel zwischen der Verriegelungshülse und dem Flansch in Eingriff gebracht werden, wo durch die Verriegelungshülse mit dem Flansch mechanisch wirkverbunden wird. Die Drehbewegung der Verriegelungshülse wird auf das mechanisch direkt oder indirekt wirkverbundene Steuerteil übertragen, so dass dieses zumindest bereichsweise mitdreht. Die mit der Halterung der Verbinder in Eingriff stehende Steuerkulisse wandelt die Drehbewegung des Steuerteils in eine durch die Form der Steuerkulisse vordefinierte und die Feder mitbestimmte Längskraft um, welche auf die Halterung wirkt, so dass der mindestens eine in die Halterung eingesetzte oder in diese integrierte Verbinder in axialer Richtung verschoben, respektive gegen die Kraft der Feder entlastet wird, bis er mit seinem Gegenstück in der vorgesehenen Art und Weise wirkverbunden, respektive entlastet ist. Die Steuerkulisse ist derart ausgestaltet, dass beim Einrasten der Verbinder oder kurz danach auch die Verriegelungshülse gegenüber dem Flansch verriegelt ist. Bei Bedarf kann die Feder durch eine entsprechend ausgestaltete Steuerkulisse am Ende entspannt werden.

Die Steuerkulisse weist in einer Ausführungsform eine in sich geschlossene, endlose Ausgestaltung auf. Damit wird erreicht, dass der in sie eingreifende Zapfen der Halterung beim Verriegeln und beim Entriegeln einem unterschiedlichen Weg folgt. Die Kulisse wird dabei auf den in die Halterung eingesetzten oder in diese integrierten Verbinder abgestimmt, so dass diese problemlos automatisch ver- und entriegelt werden können.

In einer weiteren Ausführungsform ist die Steuerkulisse so ausgestaltet, dass sie zur Entlastung der zwischen den Verbindern, respektive deren Halterung und der Verriegelungshülse gespannten Feder führt.

Zum Entriegeln des Steckerteils wird vereinfacht wie folgt vorgegangen: Die Verriegelungshülse wird in entgegengesetzter Richtung gedreht, so dass die mechanischen Wirkverbindungsmittel zwischen der Verriegelungshülse und der Buchse kontrolliert werden. Gleichzeitig greift die Halterung je nach Ausführungsform in einen zweiten Teil der Steuerkulisse ein, wodurch die Halterung kontrolliert nach hinten gezogen wird oder in denselben Teil der Steuerkulisse. Diese Bewegung wird auf die mit der Halterung wirkverbundenen Verbinder übertragen, welche dadurch entriegelt und aus ihrem Gegenstück herausgezogen werden. Bei Bedarf kann die Steuerkulisse eine Sperrklinke, z.B. in Form einer federnd nach innen vorstehenden Zunge, integriert sein, welche sicherstellt, dass der Zapfen sich immer in der vorgesehenen Richtung durch die Steuerkulisse bewegt.

In einer Ausführungsform wird der Halter für die Verbinder in einer gefederten Kulisse geführt, welche ihrerseits in eine Verriegelungshülse eingepresst ist. Wenn die Verriegelungshülse auf den Flansch geschraubt wird, wird der Halter durch den Federdruck der Kulisse nach vorne bewegt und koppelt den oder die Verbinder mit ihrem Gegenstück (z.B. SFP-Modul). Wenn die Verriegelungshülse losgeschraubt wird, wird der Verbinder durch Rückwärtsbewegung des Halters entkoppelt. Falls erforderlich kann die Umlaufrichtung der Bewegung des Halters via eine Rampe an der Kulisse bestimmt werden. Die Drehmomentabstützung des Halters beim Koppel- und Entkoppelvorgang kann z.B. über die Verbinder auf ihr Gegenstück oder, über entsprechende ineinander greifende Geometrien, direkt zwischen Halter und Flansch erfolgen. Der Flansch und/oder die Verriegelungshülse kann die Funktion der Orientierung, der Positionierung und des kontrollierten Einführens der Verbinder übernehmen und kann Dichtungen gegen Umwelteinflüsse aufweisen. Die Verriegelungshülse kann kabelseitig eine Dichtung und einen Crimphals für die Kabelbefestigung aufweisen.

Die erfindungsgemäss Kabeleinführung unterscheidet sich vom Stand der Technik u. a. indem z.B. fiberoptische LC-Verbinder nicht wie üblich manuell ein- und ausgesteckt werden, sondern über einen Mechanismus von Aussen ferngelenkt sind. Dies hat den Vorteil, dass Fehlbedienungen weitgehend vermieden werden können. Ein weiterer Vorteil besteht darin, dass undefinierte Steckpositionen vermieden werden können. Positionstoleranzen zwischen dem Fiberoptikstecker und dem Gegenstück können automatisch ausgeglichen werden. Das System ist kompakt, da der nötige Kopplungshub auf inneren und äusseren Komponenten verteilt wird.

Die Aussenkopplung zwischen der Verriegelungshülse und dem Flansch kann je nach Anwendungsgebiet durch Drehen (Gewinde, Bajonett etc.) oder Längsbewegung (Schnappen, Push-Pull, etc.) hergestellt werden. Der Antrieb für die Halterung kann bei Bedarf auch entkoppelt von der Verriegelungshülse ausgeführt werden. Z.B. kann ausserhalb der Verriegelungshülse eine längsverschiebbare Hülse angeordnet sein, welche mit der Verriegelungshülse wirkverbunden ist und deren Drehbewegung bewirkt.

In einer Ausführungsform weist die Kabeleinführung einen Flansch und ein Steckerteil au, das zur Wirkverbindung mit dem Flansch geeignet ist. Der Steckerteil weist eine Verriegelungshülse und eine mit dieser über eine Steuerkulisse wirkverbundene Halterung für einen Verbinder auf. Die Steuerkulisse ist derart ausgestaltet, dass eine Drehung der Verriegelungshülse um die Längsachse des Steckerteils eine axiale Verschiebung der Halterung in Längsrichtung gegenüber der Verriegelungshülse bewirkt. In der Regel ist die Steuerkulisse endlos ausgestaltet, derart, dass die Halterung beim Verriegeln und beim Entriegeln der Verriegelungshülse gegenüber dem Flansch unterschiedliche Längsbewegungen/-wege ausführt, derart, dass die Verbinder mit dem Gegenstück gekoppelt und entkoppelt werden. In einer Ausführungsform besteht die Steuerkulisse im Wesentlichen aus vier Funktionsabschnitten. Je nach Anwendungsgebiet sind andere Ausgestaltungen möglich. Falls erforderlich ist die Steuerkulisse an einem Steuerteil angeordnet ist, welches gegenüber der Verriegelungshülse in Längsrichtung verschiebbar angeordnet ist. Das Steuerteil kann über eine Feder mit der Verriegelungshülse wirkverbunden sein. Die Halterung kann zur Aufnahme eines Verbinders geeignet sein, welcher einen Grundkörper und einen daran angeordneten Verriegelungsarm aufweist, welcher über ein Entriegelungselement entriegelt werden kann. Die Verriegelungshülse kann über ein Gewinde mit dem Flansch wirkverbunden sein. Die Halterung für die Verbinder kann drehfest angeordnet sein. Das Steuerelement kann über ein Wirkverbindungsmittel drehfest gegenüber der Verriegelungshülse angeordnet ist.

Die Erfindung wird anhand von in den nachfolgenden Figuren gezeigten Ausführungsformen näher erläutert. Es zeigen:
- Fig. 1: eine erste Ausführungsform einer Kabeleinführung in einer Draufsicht;
- Fig. 2: die Kabeleinführung in einer Schnittdarstellung;
- Fig. 3: die Kabeleinführung in einer Explosionsdarstellung von schräg vorne;
- Fig. 4: die Kabeleinführung in einer Explosionsdarstellung von schräg hinten;
- Fig. 5: einen Steckerteil und eine Buchse vor der Montage;
- Fig. 6: ein Steuerteil in einer Seitenansicht;
- Fig. 7: zwei Verbinder einer Halterung für die Verbinder;
- Fig. 8: zeigt eine weitere Ausführungsform einer Kabeleinführung in einer perspektivischen Darstellung;
- Fig. 9: zeigt die Kabeleinführung gemäss Figur 8 in einer teilweise geschnittenen Darstellung;
- Fig. 10: zeigt die Kabeleinführung gemäss Figur 8 in einer Explosionsdarstellung;
- Fig. 11: zeigt ein zweites Steuerteil in einer Seitenansicht.

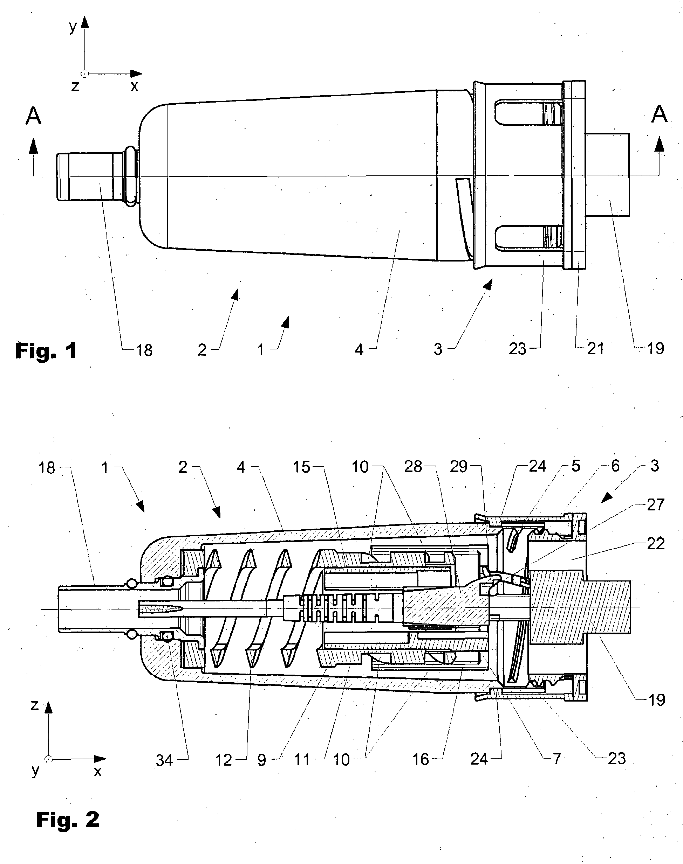

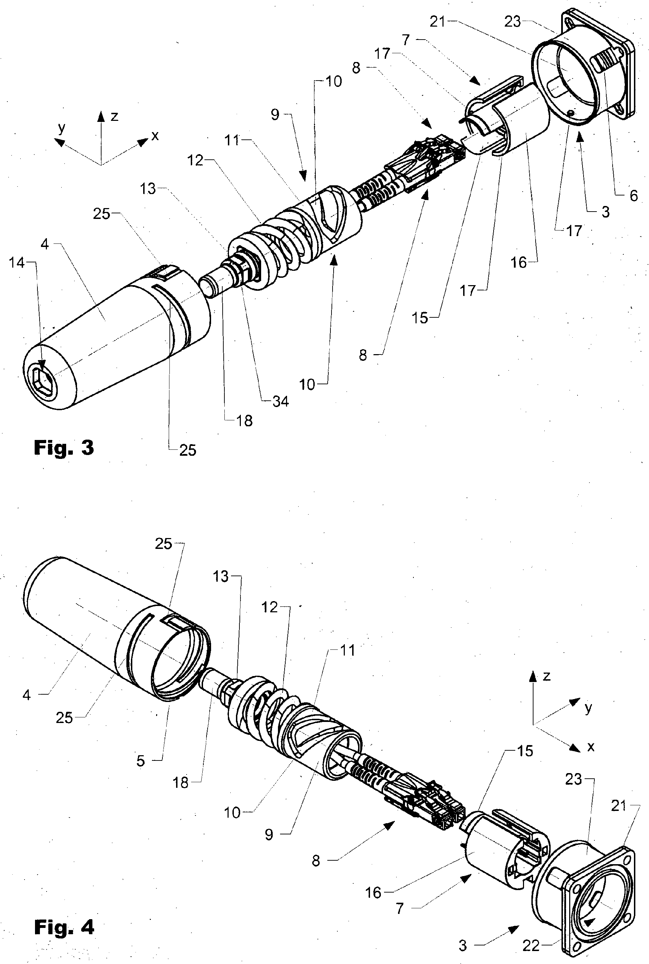

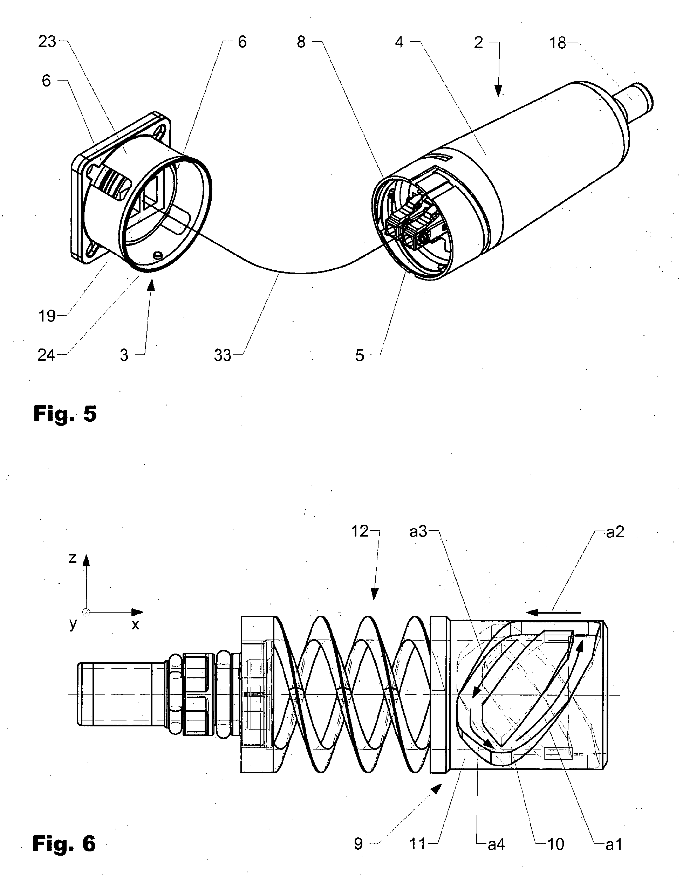

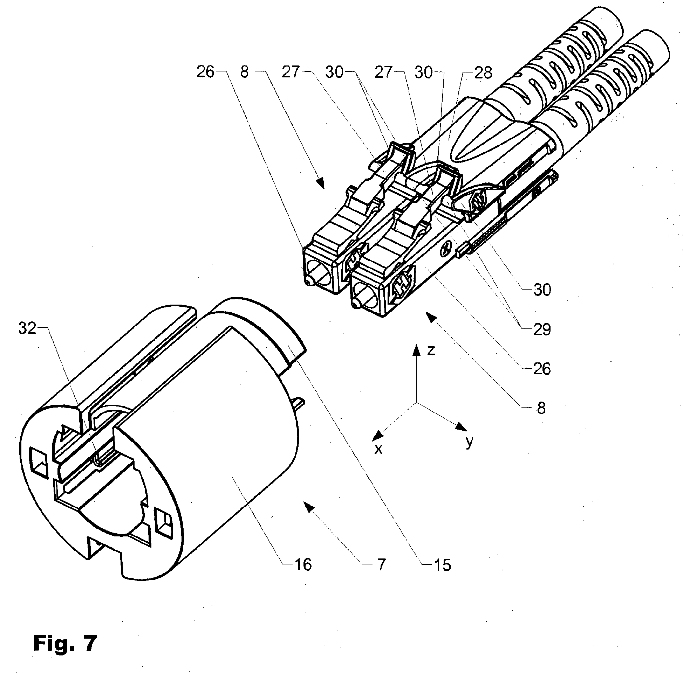

**Figur 1** zeigt eine Kabeleinführung 1 mit einem kabelseitigen Steckerteil 2 und einen gehäuseseitigen Flansch 3 in einer Draufsicht in wirkverbundehem Zustand. **Figur 2** zeigt eine Schnittdarstellung durch die Kabeleinführung **1** entlang der Schnittlinie AA. Figur **3** zeigt die Kabeleinführung 1 in einer perspektivischen Explosionsdarstellung von schräg vorne oben und **Figur 4** **die** Kabeleinführung 1 in einer perspektivischen Explosionsdarstellung von schräg hinten oben. **Figur 5** zeigt den kabelseitigen Steckerteil 2 und den gehäuseseitigen Flansch 3 in demontiertem Zustand. **Figur 6** zeigt ein Steuerteil 9 und eine Feder 12 in einer Seitenansicht. **Figur 7** zeigt eine Halterung 7 und zwei Verbinder 8 in einer perspektivischen Darstellung von schräg vorne und oben vor der Montage.

Der Steckerteil 2 weist eine Verriegelungshülse 4 mit einem Innengewinde 5 auf, das in gekoppelten Zustand der Kabeleinführung 1 mit einem Aussengewinde 6 des Flansches 3 zusammenwirkt (vgl. **Figur 2**). Alternativ oder in Ergänzung können bei Bedarf weitere Wirkverbindungsmittel vorgesehen sein. In der gezeigten Ausführungsform ist der Flansch 3 zweiteilig ausgestaltet. Ein innerer Flanschteil 21 ist zur Montage an einem Gehäuse eines Gerätes (beide nicht näher dargestellt) vorgesehen und weist eine Montageöffnung 22 auf, durch welche ein Gegenstück 19 (z.B. SFP-Modul) mit den Verbindern 8 wirkverbunden werden kann. In einem äusseren Flanschteil 23 sind Positionierungszapfen 24 angeordnet, welche sicherstellen, dass das Steckerteil nur in einer Position mit dem Flansch 3 wirkverbunden werden kann. Die Positionierungszapfen 24 greifen beim Aufstecken des Steckerteils 2 auf den Flansch 3 in entsprechende geformte Nuten 25 an der Verriegelungshülse 4 ein, welche von der Form her auf die Bewegung, respektive die Gewinde 5, 6 abgestimmt sind.

Im Innern der Verriegelungshülse 4 ist die Halterung 7 angeordnet, die zur Aufnahme von einem oder mehreren Verbinder 8 dient. Die Halterung 7 kann so ausgestaltet sein, dass die Verbinder 8 darin festgeklemmt werden können. Andere Befestigungsarten, z.B. Kleben oder Schweissen sind möglich.

Die Halterung 7 ist in Längsrichtung (x-Richtung) des Steckerteils 2 verschiebbar angeordnet. Eine Drehung der Halterung 7 um die Längsrichtung ist in der gezeigten Ausführungsform nicht vorgesehen. Die Position der Halterung 7 und damit der Verbinder 8 wird durch das Steuerteil 9 bestimmt, welches mit der Halterung 7 über zwei einander gegenüberliegenden Steuerkulissen 10 zusammenwirkt. Die Steuerkulissen 10 sind in der gezeigten Ausführungsform an einer zylindrischen Aussenfläche 11 des Steuerteils 9 angeordnet und wirken mit zwei radial von aussen in diese eingreifenden Zapfen 17 der Halterung 7 zusammen. Wie in den **Figuren 3** und **4** zu erkennen ist, sind die Steuerkulissen 10 endlos ausgestaltet und beschreiben einen geschlossenen Weg, indem sich die Zapfen 17 beim Ver- und Entriegeln der Verriegelungshülse 4 gegenüber dem Flansch 3 in einer Richtung endlos bewegen. Bei Bedarf kann eine Sperrklinke (nicht näher dargestellt) oder ein anderes Mittel vorgesehen sein, welches die Drehrichtung definiert und einen ungewollten Richtungswechsel verhindert. Die Sperrklinke kann z.B. am Grund einer Steuerkulisse 10 in Form einer Rampe oder einer federnden Zunge (beide nicht näher dargestellt, andere Ausgestaltungen sind möglich) ausgebildet sein. Sobald der zugeordnete Zapfen 17 darüber gerutscht ist, verhindert die Sperrklinke eine ungewollte Umkehr der Drehrichtung.

Das Steuerteil 9 ist über die Feder 12 mit der Verriegelungshülse 4 wirkverbunden. Zu diesem Zweck weist die Feder am hinteren Ende einen Vierkant 13 auf, der gleichzeitig einen Crimphals 18 zum , der in eine entsprechend geformte Ausnehmung 14 der Verriegelungshülse 4 formschlüssig eingreift. Die Feder 12 ist so ausgebildet, dass sie die Drehung der Verriegelungshülse 4 um die Längsachse (x-Achse) auf das Steuerteil 9 überträgt, welches wiederum auf die Längsposition der in der gezeigten Ausführungsform drehfest angeordneten Halterung 7 der Verbinder 8 einwirkt. Alternativ oder in Ergänzung kann die Bewegung der Verriegelungshülse auch durch eine andere mechanische Verbindung, z.B. Nut und Zapfen, direkt oder indirekt auf das Steuerelement übertragen werden.

Bei Bedarf können zwischen der Verriegelungshülse 4 und dem Flansch 3, respektive der Verriegelungshülse 4 und dem Crimphals 18 eine oder mehrere Dichtungen 34 angeordnet sein, welche das Innenleben der Kabeleinführung 1 gegenüber äusseren Einflüssen abdichten. Die Bestandteile der Kabeleinführung können aus Kunststoff und/oder Metall gefertigt werden. In der gezeigten Ausführungsform sind die Halterung 9 und die Feder 12 als ein Bauteil ausgeführt, welches am hinteren Ende eine drehstarre Aufnahme für den hier aus Metall gefertigten hülsenförmigen Crimphals 18 aufweist.

Die Feder 12 ist so ausgestaltet, dass sie eine ausreichende Torsionssteifigkeit aufweist, derart, dass die Drehbewegung der Verriegelungshülse 4 auf das Steuerelement 9 übertragen wird.

Wie in **Figur 2** zu erkennen ist, ist die Halterung 8 in der gezeigten Ausführungsform im hinteren Bereich doppelwandig ausgebildet. Ein innerer Teil 15 dient zur Aufnahme und eigentlichen Halterung der Verbinder 8. An einem äusseren Teil 16 sind die Zapfen 17 angeordnet, welche von aussen in die Steuerkulissen 10 eingreifen. Der äussere Teil 16 umgreift das Steuerelement 9 in montierter Stellung von aussen und kann dieses bei Bedarf zur axialen Führung und Stabilisierung seitlich gegenüber der Verriegelungshülse 4 abstützen. In der Regel ist es erwünscht, dass das Innenleben des Steckerteils ein gewisses Spiel aufweist, so dass Fehlstellungen und Ungenauigkeiten ausgeglichen werden können.

In Figur 7 sind die optischen Verbinder 8 und die Halterung 7 isoliert dargestellt. Die Verbinder 8 weisen je einen Grundkörper 26 mit einem nach schräg hinten oben abstehenden Verriegelungsarm 27 auf, der beim Wirkverbinden mit einem Gegenstück 19 (vgl. Figur 2) in diesem einrastet. Ein hier klammerartig ausgebildetes, auf die Grundkörper 26 aufgeschnapptes und gegenüber diesen in Längsrichtung verschiebbares Entriegelungselement 28 ist mit den Verriegelungsarmen 27 über einen nach oben vorstehenden Bügel 29 wirkverbunden. Damit der Verbinder 8 eine geringe Bauhöhe aufweist, ist der Bügel 29 in der gezeigten Ausführungsform nicht durchgehend ausgestaltet und wirkt von der Seite her mit an den Verriegelungsarmen 27 angeformten Rampen 30 zusammen. Indem das Entriegelungselement 28 nach hinten (-x-Richtung) verschoben wird, werden die Verriegelungsarme 27 über die Rampe 30 nach unten gezogen, so dass der Verbinder 8 entriegelt wird und entnommen werden kann.

Das Entriegelungselement 28 weist seitlich Vertiefungen 31 auf, welche in montiertem Zustand mit entsprechenden, am Innenteil 15 des Halters 7 ausgebildeten Erhöhungen 32 zusammenwirken. Diese sind so ausgebildet, dass die Verbinder 8 in sie eingeschnappt werden können.

In **Figur 2** ist der Steckerteil 2 mit der Buchse 3 wirkverbunden dargestellt. Dabei sind die Verbinder 8 in das Gegenstück 19 eingeschnappt. Das Gegenstück 19 ist normalerweise im Innern eines Gerätes (nicht näher dargestellt) gegenüber der Buchse 3 ortsfest gelagert. Durch das Einstecken der Verbinder 8 in das Gegenstück 19 wird verhindert, dass die Halterung 7 beim Wirkverbinden des Steckerteils 2 mit der Buchse 3 ungewollt mitdreht. Bei Bedarf kann alternativ oder in Ergänzung eine Drehsperre vorgesehen werden, welche zwischen dem Flansch 3 und der Halterung 7 wirkt, z.B. ein Zapfen in eine dafür vorgesehene in Längsrichtung verlaufende Nut eingreift.

In **Figur 5** ist der für das Anschliessen, resp. Entkoppeln des Steckerteils 2 mit dem Flansch 3 erforderliche Weg durch die Linie 33 schematisch dargestellt. Zum Anschliessen des Steckerteils 2 an der Buchse 3 wird dieses zuerst auf die Buchse 3 aufgesetzt, so dass die in die Halterung 7 eingesetzten Verbinder 8 in Längsrichtung (x-Richtung) bis zu einer ersten Tiefe ins Gegenstück 19 eingeschoben sind und die äusseren Wirkverbindungsmittel (im vorliegenden Fall das Innen- mit dem Aussengewinde 5, 6, sowie die Positionierungszapfen 20 mit den dafür vorgesehenen Nuten 25) zwischen der Verriegelungshülse 4 und dem Flansch 3 initial in Eingriff gebracht sind. Durch das Einschieben der Verbinder 8 ins Gegenstück 19 wird die Halterung in der gezeigten Ausführungsform gegen ungewolltes Verdrehen gesichert. Anschliessend wird die Verriegelungshülse 4 um die Längsachse im Uhrzeigersinn gedreht, wodurch die Verriegelungshülse 4 auf dem Flansch 3 befestigt wird. Gleichzeitig wird das über die Feder 12 mit der Verriegelungshülse wirkverbundene Steuerteil 9 gegenüber der Halterung 7 verdreht, so dass die in die Steuerkulisse 10 des Steuerteils 9 eingreifenden Zapfen 17 entlang der Steuerkulisse 10 bewegt werden. Als Folge davon werden die in die Halterung 7 eingesetzten Verbinder 8 in axialer Richtung nach vorne gedrückt, bis die Verriegelungsarme 27 in die dafür vorgesehenen Aussparungen (nicht näher dargestellt) des Gegenstücks 19 eingerastet sind. Die Steuerkulisse 10, sowie die Gewinde 5, 6 bestimmen massgeblich wie stark die Feder 12 gespannt wird, respektive wie hoch die Einpresskraft ist.

Zum Entkoppeln des Steckerteils 2 wird die Verriegelungshülse 4 in der entgegen gesetzten Richtung um die x-Achse gedreht. Dabei werden die Zapfen 17 auf einem anderen Teil der Steuerkulisse 10 wieder zur Ausgangsposition zurückgeführt. Dabei wird die Halterung 7 und mit ihr das Entriegelungselement 28 der Verbinder 8 kontrolliert nach hinten (- x-Richtung) gezogen und dadurch die Verriegelungsarme 27 in der beschriebenen Art und Weise gegenüber dem Gegenstück 19 entriegelt. Der Verlauf des Ver- und des Entriegelungsvorgangs kann durch Veränderung der Form der Steuerkulisse 10 beeinflusst werden. In Figur 6 ist das Steuerelement 9 und die Feder 12 isoliert dargestellt. Zu erkennen ist, dass in der gezeigten Ausführungsform auf zwei gegenüberliegenden Seiten auf der Aussenfläche 11 zwei identische Steuerkulissen 10 angeordnet sind. Diese weisen im Wesentlichen vier Funktionsabschnitte auf, die sich vereinfacht dargestellt wie folgt gliedern:
1. Funktionsabschnitt (a1): Dieser Bereich dient beim Verriegeln zum nach vorne Schieben (+ x-Richtung) der Zapfen 17, resp. der Halterung 7 (vgl. **Figur 3**) bis die Verbinder 8 ins Gegenstück 19 eingerastet sind.
2. Funktionsabschnitt (a2): In der Endposition wird die gespannte Feder 12 durch den im Wesentlichen in Längsrichtung verlaufenden 2. Funktionsabschnitt entspannt, indem die Zapfen 17 in Pfeilrichtung bewegt werden. Dadurch wird erreicht, dass keine Zwangskräfte auf das Gegenstück 19 wirken. Ein damit verbundenes Geräusch kann als akustisches Signal für den Abschluss des Einrastvorgangs verwendet werden.
3. Funktionsabschnitt (a3): Beim Entriegeln dient der dritte Funktionsabschnitt zum Zurückziehen der Halterung 7, respektive dem Entriegelungselement 28 gegenüber dem Gegenstück 19, so dass die Verriegelungsarme 27 entriegelt und der Verbinder 8 aus dem Gegenstück 19 entnommen wird.
4. Funktionsabschnitt (a4): Der vierte Funktionsabschnitt dient zum erneuten Entspannen der Feder 12 und zum Wiederherstellen der Ausgangssituation. Bei Bedarf kann in diesem Bereich eine Sperrklinke oder eine elastisch vorstehende Zunge vorgesehen werden, welche verhindert, dass die Zapfen 17 sich in der falschen Richtung bewegen.

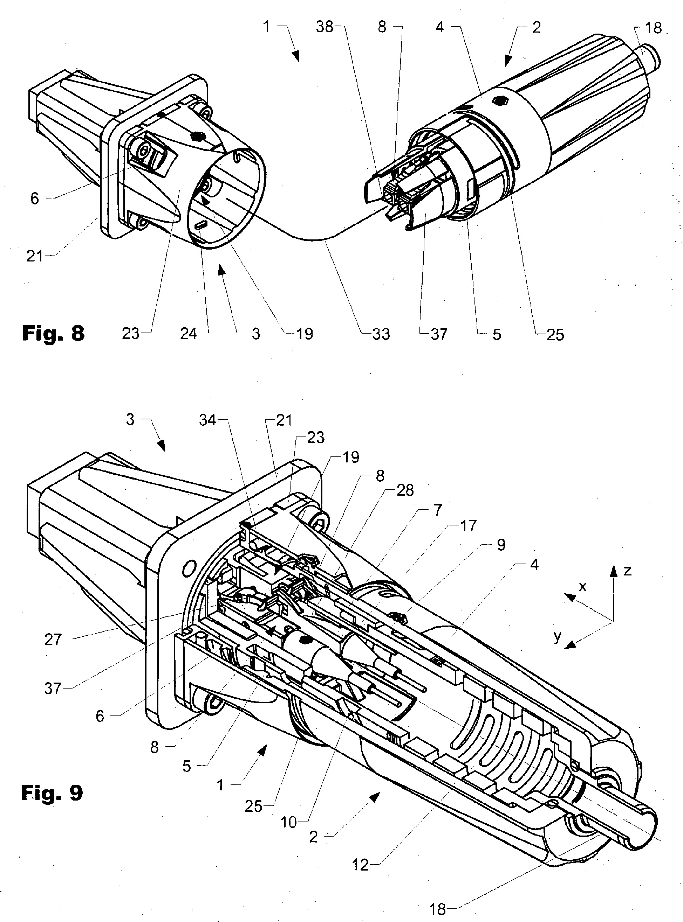

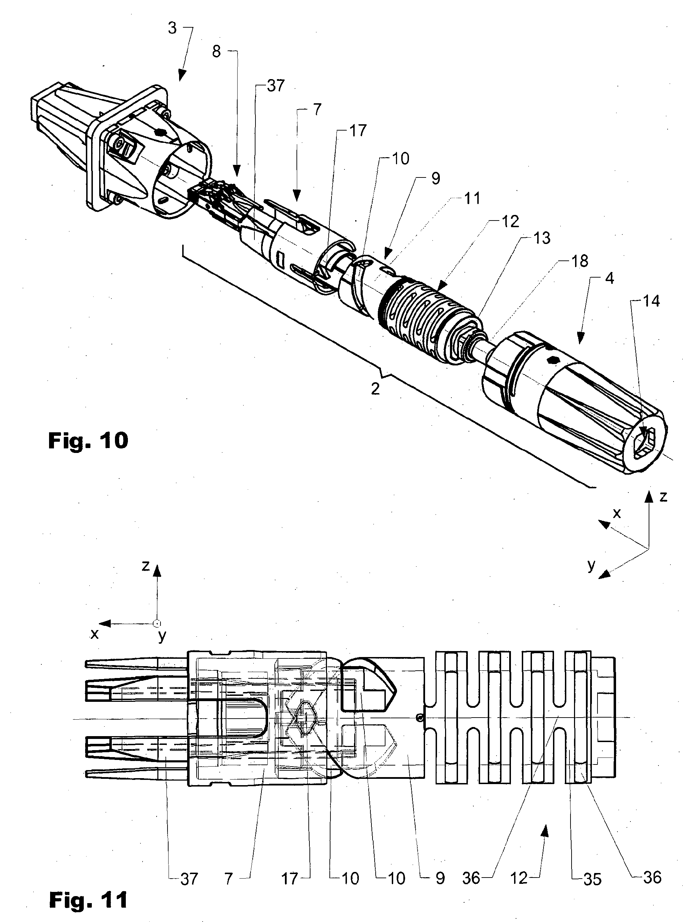

**Figur 8** zeigt eine weitere Ausführungsform einer Kabeleinführung 1 mit einem kabelseitigen Steckerteil 2 und einen gehäuseseitigen Flansch 3 in einer perspektivischen Darstellung. Der Steckerteil 2 und der Flansch 3 sind voneinander getrennt dargestellt. Die Linie 33 zeigt die Montagerichtung schematisch an. **Figur 9** zeigt den Steckerteil 2 und den Flansch 3 in wirkverbundenem Zustand. Allerdings ist die Verriegelungshülse 4 noch nicht mit dem Flansch verschraubt. Die Teile sind teilweise geschnitten dargestellt, dass eine Innenansicht möglich ist. **Figur 10** zeigt die Kabeleinführung 1 in einer perspektivischen Explosionsdarstellung von schräg vorne oben.

Der Steckerteil 2 weist hier ebenfalls eine Verriegelungshülse 4 mit einem Innengewinde 5 auf, das in gekoppelten Zustand der Kabeleinführung 1 mit einem Aussengewinde 6 des Flansches 3 zusammenwirkt. Alternativ oder in Ergänzung können bei Bedarf weitere Wirkverbindungsmittel vorgesehen sein. In der gezeigten Ausführungsform ist der Flansch 3 zweiteilig ausgestaltet. Ein innerer Flanschteil 21 ist zur Montage an einem Gehäuse eines Gerätes (beide nicht näher dargestellt) vorgesehen und weist eine Montageöffnung 22 auf, durch welche ein Gegenstück 19 (z.B. SFP-Modul) mit den Verbindern 8 wirkverbunden werden kann. In einem äusseren Flanschteil 23 sind Positionierungszapfen 24 angeordnet, welche sicherstellen, dass das Steckerteil nur in einer Position mit dem Flansch 3 wirkverbunden werden kann. Die Positionierungszapfen 24 greifen beim Aufstecken des Steckerteils 2 auf den Flansch 3 in entsprechende geformte Nuten 25 an der Verriegelungshülse 4 ein, welche von der Form her auf die Bewegung, respektive die Gewinde 5, 6 abgestimmt sind.

Im Innern der Verriegelungshülse 4 ist die Halterung 7 angeordnet, die zur Aufnahme von einem oder mehreren Verbindern 8 dient. Die Halterung 7 kann so ausgestaltet sein, dass die Verbinder 8 darin festgeklemmt werden können. Andere Befestigungsarten, z.B. Kleben oder Schweissen sind möglich.

Die Halterung 7 ist in Längsrichtung (x-Richtung) des Steckerteils 2 verschiebbar angeordnet. Eine Drehung der Halterung 7 um die Längsrichtung ist in der gezeigten Ausführungsform nicht vorgesehen. Die Position der Halterung 7 und damit der Verbinder 8 gegenüber der Verriegelungshülse 4 wird durch das Steuerteil 9 bestimmt, welches mit der,Halterung 7 über zwei hier einläufig ausgestaltete, einander gegenüberliegenden Steuerkulissen 10 zusammenwirkt. Die Steuerkulissen 10 sind in der gezeigten Ausführungsform an einer zylindrischen Aussenfläche 11 des Steuerteils 9 angeordnet und wirken mit zwei radial von aussen in diese eingreifenden Zapfen 17 der Halterung 7 zusammen.

Wie in den **Figuren 10** zu erkennen ist, sind die Steuerkulissen 10 dieser Ausführungsform im Unterschied zur Ausführungsform gemäss den **Figuren 1** bis **7** einläufig, d.h. sie beschreiben im Unterschied zur Ausführungsform keinen in sich geschlossenen Weg. Die Zapfen 17 beschreiten daher beim Ver- und Entriegeln der Verriegelungshülse 4 gegenüber dem Flansch 3 in unterschiedlicher Richtung denselben Verlauf.

Das Steuerteil 9 ist über die Feder 12 mit der Verriegelungshülse 4 wirkverbunden. Zu diesem Zweck weist die Feder am hinteren Ende einen Vierkant 13 auf, der gleichzeitig einen Crimphals 18 aufweist. Der Vierkant 13 greift im zusammengesetzten Zustand in eine entsprechend geformte Ausnehmung 14 der Verriegelungshülse 4 formschlüssig ein. Die Feder 12 ist so ausgebildet, dass sie die Drehung der Verriegelungshülse 4 um die Längsachse (x-Achse) auf das Steuerteil 9 überträgt, welches wiederum auf die Längsposition der in der gezeigten Ausführungsform drehfest angeordneten Halterung 7 der Verbinder 8 einwirkt. Alternativ oder in Ergänzung kann die Bewegung der Verriegelungshülse auch durch eine andere mechanische Verbindung, z.B. Nut und Zapfen, direkt oder indirekt auf das Steuerelement übertragen werden.

Die Bestandteile der Kabeleinführung können aus Kunststoff und/oder Metall gefertigt werden. In der gezeigten Ausführungsform sind die Halterung 9 und die Feder 12 als ein Bauteil ausgeführt, welches am hinteren Ende eine drehstarre Aufnahme für den hier aus Metall gefertigten hülsenförmigen Crimphals 18 aufweist. Die Feder 12 ist so ausgestaltet, dass sie eine ausreichende Torsionssteifigkeit aufweist, derart, dass die Drehbewegung der Verriegelungshülse 4 auf das Steuerelement 9 übertragen wird. Sie besteht aus tangential verlaufenden Federbereichen 35, die über axial verlaufende versetzt zueinander angeordnete Stege 36 wirkverbunden sind (vgl. auch **Figur 11**).

Am vorderen Ende der Halterung 7 sind axial nach vorne überstehende Zentriermittel 37 ausgebildet, welche beim Einstecken des Steckerteils 2 in den Flansch 3 die Halterung 7 und mit ihr die Verbinder 8 gegenüber dem Flansch 3 , respektive ihrem Gegenstück 19 ausrichten und für die anschliessende Wirkverbindung in Position bringen. Die Zentriermittel 37 können auch anders ausgestaltet sein. In der gezeigten Ausführungsform dienen sie gleichzeitig als Schutz für die Verbinder 8, respektive deren Kontaktmittel (Ferrulen) 38 gegen äussere Einflüsse.

Beim Wirkverbinden dienen die Zentriermittel 37 zum Ausrichten der Halterung 7 und der Verbinder 8 gegenüber dem Flansch 3. Anschliessend wird die Verriegelungshülse in Richtung des Flansches 3 geschoben bis die Positionierungszapfen 24 in die Nuten 25 eingreifen. Dadurch wird die Feder 12 gespannt, bis die Verbinder 8 in ihr Gegenstück 19 einschnappen. Dann wird die Verrieglungshülse 4 gegenüber dem Flansch 3 gedreht, so dass die Gewinde 5, 6 ineinander eingreifen. Gleichzeitig wird die Feder 12 entspannt indem die Zapfen 17 entlang der Nut 10 bewegt werden. Dadurch wird erreicht, dass die Verbinder 8 in wirkverbundenem Zustand von der Kraft der Feder 12 entlastet sind. Dies wird erreicht, indem die Steigung der Nut 10 grösser gewählt wird als die Steigung der Gewinde 5, 6. Durch die Wahl der Steigung der Nut 10 kann die Restkraft bestimmt werden.

**Figur 11** zeigt die Halterung 7, sowie das Steuerteil 7 und die Feder 12 gemäss der Ausführungsform der **Figuren 8** bis **10** mit einer Seitenansicht. Die nicht sichtbaren Linien sind gestrichelt dargestellt. Die beiden gegenüberliegenden, nutartig ausgestalteten, einander 180° gegenüberliegenden Steuerkulissen 10 weisen zumindest bereichsweise eine Steigung auf, die grösser ist als die Steigung der Gewinde 5, 6 (vgl. **Figur 8**). In die Steuerkulissen 10 greifen von aussen her die Zapfen 17 ein, welche die axiale Position der Halterung 7 gegenüber dem Steuerteil 9 in Abhängigkeit des Drehwinkels definieren.

Bei der Ausführungsform gemäss den **Figuren 1** bis **7** ist die Steuerkulisse 10 so ausgestaltet, dass durch das Drehen der Verriegelungshülse 4 zuerst die Feder 12 gespannt wird bis die Verbinder eingerastet sind. Dann wird die Feder 12 durch einen dafür vorgesehenen Funktionsabschnitt entspannt (vgl. **Figur 6**). Im Unterschied dazu, wird in der Ausführungsform gemäss den **Figuren 8** bis **11** die Feder 12 durch das Einstecken der Verriegelungshülse 4 in den Flansch 3 gespannt, so dass die Verbinder 8 wirkverbunden werden. Dann wird die Feder durch das Drehen der Verriegelungshülse 4 wieder entspannt bis die Verriegelungshülse gegenüber der Buchse 3 komplett verriegelt ist.

**BEZUGSZEICHENLISTE**

| | | | |
|---|---|---|---|
| 1 | Kabeleinführung | 20 | Positionierungszapfen |
| 2 | Steckerteil | 21 | Innerer Flanschteil |
| 3 | Flansch | 22 | Montageöffnung |
| 4 | Verriegelungshülse | 23 | Äusserer Flanschteil |
| 5 | Innengewinde | 24 | Positionierungszapfen |
| 6 | Aussengewinde | 25 | Nut |
| 7 | Halterung | 26 | Grundkörper |
| 8 | Verbinder | 27 | Verriegelungsarm |
| 9 | Steuerteil | 28 | Entriegelungselement |
| 10 | Steuerkulisse (Führungsnut) | 29 | Bügel |
| 11 | Aussenfläche | 30 | Rampen |
| 12 | Feder | 31 | Vertiefung |
| 13 | Vierkant | 32 | Erhöhungen |
| 14 | Ausnehmung | 33 | Weg (Koppeln/Entkoppeln) |
| 15 | Innere Teil (der Halterung) | 34 | Dichtung |
| 16 | Äusserer Teil (der Halterung) | 35 | Federbereich |
| 17 | Zapfen | 36 | Steg |
| 18 | Crimphals | 37 | Zentriermittel |
| 19 | Gegenstück (SFP-Modul) | 38 | Ferrule |

## Patentansprüche

1. Kabeleinführung (1) mit
a. einem Flansch (3) und
b. einem Steckerteil (2) das zur Wirkverbindung mit dem Flansch (3) geeignet ist, wobei
c. der Steckerteil (2) eine Verriegelungshülse (4) und
d. eine mit dieser über eine Steuerkulisse (10) und einen Zapfen (17), der in die Steuerkulisse (10) eingreift, wirkverbundene Halterung (7) für einen Verbinder (8) aufweist, wobei
e. die Steuerkulisse (10) an einem Steuerteil (9) angeordnet ist, welches gegenüber der Verriegelungshülse (4) in Längsrichtung (x) verschiebbar angeordnet ist, wobei
f. das Steuerteil (9) über ein Wirkverbindungsmittel drehfest gegenüber der Verriegelungshülse (4) angeordnet und wobei
g. die Steuerkulisse (10) derart ausgestaltet ist, dass eine Drehung der Verriegelungshülse (4) um die Längsachse (x) des Steckerteils (2) eine axiale Verschiebung der Halterung (7) gegenüber dem Steuerteil (9) in Längsrichtung (x) bewirkt.

2. Kabeleinführung (1) gemäss Patentanspruch 1, **dadurch gekennzeichnet, dass** die Steuerkulisse (10) endlos ausgestaltet ist, derart, dass die Halterung (7) beim Verriegeln und beim Entriegeln der Verriegelungshülse (4) gegenüber dem Flansch (3) unterschiedliche Längsbewegungen ausführt, derart, dass die Verbinder (8) mit dem Gegenstück (19) gekoppelt und entkoppelt werden.

3. Kabeleinführung (1) gemäss Patentanspruch 2, **dadurch gekennzeichnet, dass** die Steuerkulisse (10) im Wesentlichen aus vier Funktionsabschnitten (a1, a2, a3, a4) besteht.

4. Kabeleinführung (1) gemäss Patentanspruch 1, **dadurch gekennzeichnet, dass** die Steuerkulisse (10) eingängig ausgestaltet ist.

5. Kabeleinführung (1) gemäss einem der vorangehenden Patentansprüche, **dadurch gekennzeichnet, dass** das Steuerteil (9) über eine Feder (12) mit der Verriegelungshülse (4) wirkverbunden ist.

6. Kabeleinführung (1) gemäss einem der vorangehenden Patentsprüche, **dadurch gekennzeichnet, dass** die Halterung (7) zur Aufnahme eines Verbinders (8) geeignet ist, welcher einen Grundkörper (26) und einen daran angeordneten Verriegelungsarm (27) aufweist, welcher über ein Entriegelungselement (28) entriegelt werden kann.

7. Kabeleinführung (1) gemäss einem der vorangehenden Patentansprüche, **dadurch gekennzeichnet, dass** die Verriegelungshülse (4) über ein Gewinde (5, 6) mit dem Flansch (3) wirkverbindbar ist.

8. Kabeleinführung (1) gemäss Patentanspruch 7, **dadurch gekennzeichnet, dass** die Steuerkulisse (10) eine Steigung aufweist, die grösser ist als die Steigung der zwischen dem Flansch (3) und der Verriegelungshülse (4) angeordneten Gewinde (5, 6).

9. Kabeleinführung (1) gemäss einem der vorangehenden Patentansprüche, **dadurch gekennzeichnet, dass** die Halterung (7) für die Verbinder (8) drehfest angeordnet ist.

## Claims

1. A cable entry (1), comprising
a. a flange (3) and
b. a plug-in part (2) which is suitable for being operatively connected to the flange (3),
c. the plug-in part (2) having a locking sleeve (4) and
d. a holder (7) for a connector (8), the holder being operatively connected to the locking sleeve via a control link (10) and a pin (17) that engages in the control link (10),
e. the control link (10) being arranged on a control part (9) that is arranged displaceably in the longitudinal direction (x) with respect to the locking sleeve (4),
f. the control part (9) being arranged in a rotationally fixed fashion with respect to the locking sleeve (4) via an operative connection means, and
g. the control link (10) being configured so that a rotation of the locking sleeve (4) about a longitudinal axis (x) of the plug-in part (2) brings about an axial displacement of the holder (7) with respect to the control part (9) in a longitudinal direction (x).

2. The cable entry (1) according to claim 1, **characterized in that** the control link (10) is configured endlessly such that the holder (7) performs different longitudinal movements during locking and unlocking of the locking sleeve (4) with respect to the flange (3) in such a way that the connectors (8) are coupled and decoupled to and from a mating piece (19).

3. The cable entry (1) according to claim 2, **characterized in that** the control link (10) consists substantially of four functional sections (a1, a2, a3, a4).

4. The cable entry (1) according to claim 1, **characterized in that** the control link (10) is configured with a single-start.

5. The cable entry (1) according to any of the preceding claims, **characterized in that** the control part (9) is operatively connected to the locking sleeve (4) via a spring (12).

6. The cable entry (1) according to any of the preceding claims, **characterized in that** the holder (7) is suitable for accommodating a connector (8), which has a basic body (26) and a locking arm (27) which is arranged thereon and which can be unlocked via an unlocking element (28).

7. The cable entry (1) according to any of the preceding claims, **characterized in that** the locking sleeve (4) is operatively connected to the flange (3) via a thread (5, 6).

8. The cable entry (1) according to claim 7, **characterized in that** the control link (10) includes a pitch greater than a pitch of the thread (5, 6) arranged between the flange (3) and the locking sleeve (4).

9. The cable entry (1) according to any of the preceding claims, **characterized in that** the holder (7) for the connectors (8) is arranged in rotationally fixed fashion.

## Revendications

1. Passe-câbles (1) comportant
a. une bride (3) et
b. un élément d'enfichage (2) apte à être en liaison active avec la bride (3),
c. l'élément d'enfichage (2) comportant un manchon de verrouillage (4) et
d. un support (7), destiné à un connecteur (8), qui est en liaison active avec celui-ci par une glissière de commande (10) et un tourillon (17) qui s'engage dans la glissière de commande (10),
e. la glissière de commande (10) étant disposée au niveau d'un élément de commande (9) qui est disposé de manière à pouvoir coulisser dans la direction longitudinale (x) par rapport au manchon de verrouillage (4),
f. l'élément de commande (9) étant disposé de manière fixe en rotation par rapport au manchon de verrouillage (4) par le biais d'un moyen de liaison active et
g. la glissière de commande (10) étant réalisée de manière à ce qu'une rotation du manchon de verrouillage (4) sur l'axe longitudinal (x) de l'élément d'enfichage (2) provoque un coulissement axial du support (7) par rapport à l'élément de commande (9) dans la direction longitudinal (x).

2. Passe-câbles (1) selon la revendication 1, **caractérisé en ce que** la glissière de commande (10) est réalisée en continu de manière à ce que, lors du verrouillage et lors du déverrouillage du manchon de verrouillage (4), le support (7) exécute par rapport à la bride (3) différents mouvements longitudinaux de manière à ce que les connecteurs (8) soient accouplés à la pièce homologue (19) et désaccouplés de celle-ci.

3. Passe-câbles (1) selon la revendication 2, **caractérisé en ce que** la glissière de commande (10) est composée essentiellement de quatre sections fonctionnelles (al, a2, a3, a4).

4. Passe-câbles (1) selon la revendication 1, **caractérisé en ce que** la glissière de commande (10) est conformée à pas simple.

5. Passe-câbles (1) selon une des revendications précédentes, **caractérisé en ce que** l'élément de commande (9) est en liaison active avec le manchon de verrouillage (4) par l'intermédiaire d'un ressort (12).

6. Passe-câbles (1) selon une des revendications précédentes, **caractérisé en ce que** le support (7) est apte à recevoir un connecteur (8) qui comporte un corps de base (26) et un bras de verrouillage (27) disposé au niveau de celui-ci et qui peut être déverrouillé au moyen d'un élément de déverrouillage (28).

7. Passe-câbles (1) selon une des revendications précédentes, **caractérisé en ce que** le manchon de verrouillage (4) peut être en liaison active avec la bride (3) par l'intermédiaire d'un filetage (5, 6).

8. Passe-câbles (1) selon la revendication 7, **caractérisé en ce que** la glissière de commande (10) a une pente qui est supérieur à la pente du filetage (5, 6) disposé entre la bride (3) et le manchon de verrouillage (4).

9. Passe-câbles (1) selon une des revendications précédentes, **caractérisé en ce que** le support (7) destiné aux connecteurs (8) est disposé de manière fixe en rotation.
